# EUROPÄISCHE PATENTSCHRIFT

(11) **EP 2 500 253 B1**
(45) Veröffentlichungstag und Bekanntmachung des Hinweises auf die Patenterteilung: **15.05.2013**
(21) Anmeldenummer: 11001949.4
(22) Anmeldetag: 09.03.2011
(51) Int. Cl.: B62M 6/55, B25B 27/00

(54) **Vorrichtung zum positionsgenauen Montieren eines Zahnrads auf einer Kurbelwelle innerhalb eines Kurbelgehäuses eines Fahrrads**
Device for precise mounting of a gear wheel on a crankshaft within a crankcase of a bicycle
Dispositif de montage à position précise d'une roue dentée sur un arbre à manivelle à l'intérieur d'un boîtier de manivelle d'un vélo

(43) Veröffentlichungstag der Anmeldung: 19.09.2012
(73) Patentinhaber: Gruber Antrieb GmbH & Co KG, 6300 Wörgl (AT)
(72) Erfinder: Schweitzer, Karl, 6320 Angerberg (AT)
(74) Vertreter: Bauer, Friedrich

(56) Entgegenhaltungen:
- EP-A1- 1 878 650
- US-A- 5 333 377

## Beschreibung

Die Erfindung betrifft eine Vorrichtung zum positionsgenauen Montieren eines Zahnrads mittels eines Klemmelements auf einer Kurbelwelle innerhalb eines Kurbelgehäuses eines Fahrrads mittels eines Klemmelements.

Es ist bekannt, bei Fahrrädern elektrische Hilfsmotore zur Tretkraftunterstützung vorzusehen, die bei Bedarf zugeschaltet werden können. Eine besonders elegante technische Lösung besteht darin, einen elektrischen Hilfsmotor im Sattelrohr des Fahrradrahmens unterzubringen, der ein im Kurbelgehäuse (Tretlagergehäuse) angeordnetes erstes Kegelrad antreibt, das wiederum mit einem zweiten Kegelrad in Eingriff ist, das mit der Kurbelwelle fest verbunden ist.

Bei derartigen Kegelradgetrieben, bei denen die Drehachsen der beiden Kegelräder senkrecht aufeinander stehen, ist die genaue axiale Positionierung des Kegelrads auf der Kurbelwelle von großer Bedeutung. Falls das Kegelrad nicht optimal axial platziert ist, greifen die Zähne der gegenüberliegenden Zahnräder nicht optimal ineinander, so dass die Zahnflanken nicht bestimmungsgemäß abwälzen. Bereits eine Fehlpositionierung um wenige zehntel Millimeter reduziert die Lebensdauer der Zahnräder entscheidend. Weiterhin kann es zu einer unangenehmen Geräuschentwicklung kommen.

Die Befestigung des Kegelrads auf der Kurbelwelle erfolgt gemäß einem bisher durchgeführten Verfahren dadurch, dass ein Kegelrad mit axial vorstehenden Klemmzungen und einem Gewindeabschnitt sowie eine Klemmmutter verwendet wird, die auf den Gewindeabschnitt aufschraubbar ist. Beim Aufschrauben den Klemmmutter werden die Klemmzungen radial nach innen gedrückt und fest auf die Kurbelwelle gepresst.

Die genaue Positionierung des Kegelrads auf der Kurbelwelle ist bislang jedoch mit erheblichen Schwierigkeiten verbunden. Da jeder Rahmen zumindest geringfügig anders ist, muss das Kegelrad individuell eingepasst werden. Dies erfolgt bisher dadurch, dass das Kegelrad bei montiertem Motor auf die eingebaute Kurbelwelle geschoben wird und anschließend die Position vermessen wird, worauf dann der Motor und die gesamte Kurbel wieder ausgebaut werden müssen. Anschließend wird das Kegelrad auf der Kurbelwelle axial eingemessen und durch Aufschrauben der Klemmmutter festgeklemmt, worauf dann Kurbelwelle und Motor wieder eingebaut werden. Für den Fall, dass die Laufruhe nicht zufriedenstellend ist, also das Kegelrad nicht exakt an der richtigen Position sitzt, muss der Vorgang wiederholt werden. Unter umständen wird eine Fehlpositionierung des Zahnrads auch nicht erkannt. Diese Art der Montage ist fehleranfällig, zeitaufwändig, mühevoll und erfordert sehr genaues Arbeiten. Eine axiale Fehlpositionierung, welche eine Verringerung der Lebensdauer, d. h. einen Bruch oder vorzeitigen Verschleiß der Zahnräder sowie eine Erhöhung des Laufgeräusches zur Folge hat, kann nicht ausgeschlossen werden. Ein weiterer Nachteil besteht darin, dass die Klemmposition, an der die Klemmzungen mit der Kurbelwelle in Klemmeingriff sind, in axialer Richtung relativ weit vom Zahnkranz des Kegelrads und damit von derjenigen Position entfernt ist, an der die Kegelräder miteinander in Eingriff sind. Hierdurch kann es insbesondere bei Belastungsspitzen zum Verwinden des Kegelrads aufgrund von Torsionskräften um seine Drehachse kommen, was ebenfalls die Lebensdauer deutlich reduzieren kann.

Der Erfindung liegt die Aufgabe zugrunde, eine Vorrichtung der eingangs genannten Art zu schaffen, mit der ein Zahnrad auf einer Kurbelwelle innerhalb eines Kurbelgehäuses auf sehr genaue, einfache und schnelle Weise montiert werden kann.

Diese Aufgabe wird erfindungsgemäß durch eine Vorrichtung mit den Merkmalen des Anspruchs 1 gelöst. Vorteilhafte Ausführungsformen der Erfindung sind in den weiteren Ansprüchen beschrieben.

Die erfindungsgemäße Vorrichtung umfasst
- eine innere Befestigungshülse zur Befestigung der Vorrichtung an der Kurbelwelle,
- eine äußere, in das Kurbelgehäuse einführbare Zahnradhaltehülse, an der das Zahnrad lösbar befestigbar ist, und
- eine Klemmelementverschiebeeinrichtung zum axialen Verschieben des Klemmelements relativ zum Zahnrad und zur Kurbelwelle in eine Klemmposition.

Mit der erfindungsgemäßen Vorrichtung ist es auf einfache, genaue und schnelle Weise möglich, ein Zahnrad auf einer sich innerhalb eines Kurbelgehäuses befindenden Kurbelwelle festzuklemmen. Insbesondere ist es möglich, das Zahnrad ohne Demontage einer Kurbelwelle im Kurbelgehäuse eines Fahrrads exakt richtig zu positionieren und festzuklemmen. Durch Drehen der Kurbelwelle kann dann über die Rundlaufeigenschaften, d. h. insbesondere über das Laufgeräusch, die Vibrationsfreiheit und den exakten, leichtgängigen Rundlauf, festgestellt werden, ob das Zahnrad tatsächlich optimal positioniert ist. Anschließend kann das Zahnrad durch Einschieben des insbesondere konusförmigen Klemmelements auf der Kurbelwelle fixiert werden. Fehlpositionierungen des Zahnrads auf der Kurbelwelle können dadurch ausgeschlossen werden. Die Lebensdauer der Zahnräder wird bedeutend erhöht, während die Laufgeräusche minimiert werden können.

Gemäß einer vorteilhaften Ausführungsform weist die innere Befestigungshülse einen endseitigen Gewindeabschnitt auf, über den sie mit der Kurbelwelle verschraubbar ist. Alternativ hierzu ist es jedoch auch möglich, die Befestigungshülse mittels zusätzlicher Befestigungsmittel, insbesondere mittels Schrauben oder anderer Zwischenstücke, an der Kurbelwelle zu befestigen.

Vorzugsweise umfasst die Klemmelementverschiebeeinrichtung eine Schiebehülse, die zwischen der inneren Befestigungshülse und der äußeren Zahnradhaltehülse axial verschiebbar angeordnet und mit dem Klemmelement in Anlage bringbar ist. Eine derartige Schiebehülse wird einerseits durch die Befestigungshülse und andererseits durch die Zahnradhaltehülse genau geführt und kann somit auf einfache Weise koaxial zu diesen Hülsen verschoben werden. Alternativ kann die Klemmelementverschiebeeinrichtung jedoch auch anders ausgeführt sein und beispielsweise längliche Stößelelemente umfassen, die radial innerhalb der Zahnradhaltehülse angeordnet sind.

Gemäß einer vorteilhaften Ausführungsform umfasst die Klemmelementverschiebeeinrichtung einen Axialschieber, der innerhalb der Befestigungshülse axial verschiebbar angeordnet und mit der Schiebehülse gekoppelt ist. Eine derartige Anordnung ergibt eine sehr platzsparende und einfache Möglichkeit, die Klemmelementverschiebeeinrichtung, beispielsweise Schiebehülse, in der gewünschten Weise nach vorne zu schieben, um das Klemmelement zwischen Kurbelwelle und Zahnrad einzuschieben.

Eine sehr einfache Realisationsmöglichkeit wird dadurch geschaffen, dass der Axialschieber einen innerhalb der Befestigungshülse verschiebbar gelagerten Verschiebebolzen und mindestens einen Querstift umfasst, der sich durch ein axiales Langloch der Befestigungshülse radial nach außen erstreckt und mit der Schiebehülse gekoppelt ist.

Vorzugsweise ist der Axialschieber mittels einer Schraube bewegbar, die in ein Innengewinde der Befestigungshülse einschraubbar ist und stirnseitig gegen den Axialschieber drückt. Andere Ausgestaltungen sind jedoch möglich, beispielsweise in Form einer manuell drehbaren Spindel, die innerhalb der Befestigungshülse drehbar gelagert und mittels einer axial verschiebbaren Spindelmutter in Eingriff ist, die wiederum mit der Schiebehülse oder einem anderen, zum Klemmelement geführten Teil gekoppelt ist.

Gemäß einer besonders vorteilhaften Ausführungsform ist die Zahnradhaltehülse relativ zur Befestigungshülse axial verschiebbar. Hierdurch kann das Maß, um das die Zahnradhaltehülse in axialer Richtung über die Befestigungshülse übersteht, beliebig variiert werden. Hierdurch ist es auf sehr einfache Weise möglich, dann, wenn die Vorrichtung an der Kurbelwelle befestigt ist, die Axialposition des Zahnrads innerhalb des Kurbelgehäuses und damit relativ zur Kurbelwelle zu ändern, um die optimale Axialposition des Zahnrads einzustellen.

Vorzugsweise ist zumindest die Axialposition der äußeren Zahnradhaltehülse relativ zur inneren Befestigungshülse mittels einer Sicherungsmutter fixierbar. Hierdurch kann vermieden werden, dass das Zahnrad zusammen mit der Zahnradhaltehülse in ungewollter Weise verschoben werden kann. Weiterhin kann eine derartige Sicherungsmutter ein Verdrehen der Zahnradhaltehülse relativ zur Befestigungshülse unterbinden, wodurch eine sichere drehfeste Verbindung zwischen diesen beiden Hülsen geschaffen wird. Hierdurch kann eine Drehbewegung von der Kurbelwelle auf die Befestigungshülse, von dieser auf die Zahnradhaltehülse und von dieser auf das Zahnrad übertragen werden, um bei eingebauter Kurbelwelle auch das Zahnrad in Umdrehung zu versetzen.

Gemäß einer vorteilhaften Ausführungsform besteht das Klemmelement aus einer längsgeschlitzten konischen Klemmhülse. Diese konische Klemmhülse kann im einfachsten Fall einen einzigen, axial durchgehenden Längsschlitz aufweisen, wodurch sich die Klemmhülse auf einfache Weise radial zusammenpressen lässt, wenn sie in das Zahnrad eingeschoben wird. Alternative Ausführungsformen sind jedoch möglich, beispielsweise Klemmhülsen mit einem in Umfangsrichtung umlaufenden Hülsenendabschnitt, von dem sich einzelne Klemmzungen mit konusförmiger Außenumfangsfläche nach vorne, d. h. in Einschubrichtung, erstrecken.

Gemäß einer vorteilhaften Ausführungsform weist die Zahnradhaltehülse einen Gewindeabschnitt zur Schraubverbindung mit einem Gewindeabschnitt des Zahnrads auf. Das Zahnrad kann damit vor dem Einschieben in das Kurbelwellengehäuse fest mit der Zahnradhaltehülse verbunden werden. Hierdurch wird das Zahnrad beim Einpressen des Klemmelements von der Vorrichtung unverschiebbar relativ zur Kurbelwelle gehalten und vermieden, dass das Zahnrad durch das Einschieben des Klemmelements verschoben wird.

Gemäß einer vorteilhaften Ausführungsform haben die Gewindeabschnitte der Befestigungshülse und der Zahnradhaltehülse die gleiche Gewindesteigung. Hierdurch kann die Vorrichtung nach erfolgter Zahnradmontage auf einfache Weise gleichzeitig von der Kurbelwelle und vom festgeklemmten Zahnrad abgeschraubt werden, ohne dass es zu Verspannungen in den Gewindeabschnitten kommt.

Die Erfindung wird nachfolgend anhand der Zeichnungen beispielhaft näher erläutert. Es zeigen:
- Figur 1 :: einen schematischen Vertikalschnitt des Übergangsbereichs zwischen Sattelrohr und Kurbelgehäuse eines Fahrradrahmens mit motorgetriebener Kurbelwelle,
- Figur 2 :: einen Längsschnitt durch ein auf einer Kurbelwelle festklemmbares Zahnrad und eines Klemmelements,
- Figur 3 :: einen Vertikalschnitt durch die erfin-dungsgemäße Vorrichtung mit aufgesetztem Zahnrad vor dem Ankoppeln an eine Kurbel-welle eines Fahrrads,
- Figur 4 :: eine Darstellung entsprechend Figur 3, wobei die Vorrichtung an der Kurbelwelle befestigt und das Zahnrad in die gewünsch-te Sollposition vorgeschoben ist, und
- Figur 5 :: eine Darstellung entsprechend Figur 4 nach dem Einpressen des'konusförmigen Klemm-elements.

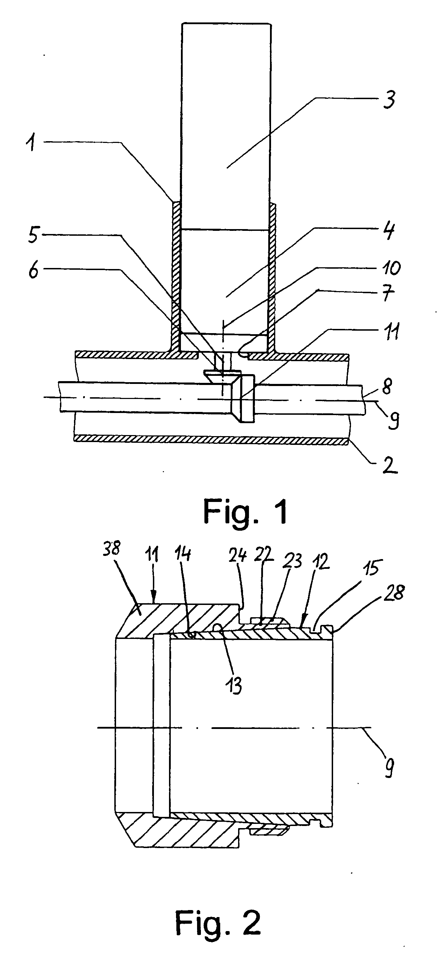

In Figur 1 ist schematisch ein Schnitt durch einen Fahrradrahmen im Übergangsbereich zwischen einem Sattelrohr 1 und einem Kurbelgehäuse 2 dargestellt.

Im verkürzt dargestellten Sattelrohr 1 ist ein Motor 3 in der Form eines zylinderförmigen Elektromotors untergebracht, der über eine Antriebswelle ein Kegelrad 6 antreibt. Die Antriebswelle 5 erstreckt sich durch eine Öffnung 7 im Kurbelgehäuse 2 hindurch, so dass sich das Kegelrad 6 innerhalb des Kurbelgehäuses 2 befindet.

Das Kurbelgehäuse 2 ist, wie dies üblicherweise bei Fahrrädern der Fall ist, quer zum Sattelrohr 1 angeordnet und rohrförmig ausgebildet. Innerhalb des Kurbelgehäuses 2 erstreckt sich eine Kurbelwelle 8, an deren beiden Enden nicht dargestellte Tretkurbeln befestigbar sind. Die Kurbelwelle 8 ist um eine Drehachse 9 mittels nicht dargestellter Lager im Kurbelgehäuse 2 drehbar gelagert. Diese Drehachse 9 erstreckt sich quer zur Drehachse 10 der Antriebswelle 5 und des Kegelrads 6. Die beiden Drehachsen 9, 10 kreuzen somit einander.

Das Kegelrad 6 erstreckt sich nach unten fast bis zur quer verlaufenden Kurbelwelle 8, hält zu dieser jedoch einen geringen, aus der Zeichnung nicht ersichtlichen Abstand ein, um eine Berührung auszuschließen.

Um die Drehbewegung des Kegelrads 6 auf die Kurbelwelle 8 zu übertragen, ist das Kegelrad 6 mit einem Zahnrad 11 in Form eines weiteren Kegelrads in Eingriff, das drehfest und axial unverschiebbar auf der Kurbelwelle 8 befestigt ist.

Wie aus Figur 2 ersichtlich, wird zur Befestigung des Zahnrads 11 auf der Kurbelwelle 8 eine konische Klemmhülse 12 verwendet, die zwischen der Kurbelwelle 8 und dem Zahnrad 11 in axialer Richtung eingeschoben und eingepresst wird. Die Klemmhülse 12 besteht im dargestellten Ausführungsbeispiel aus einer zweckmäßigerweise aus Metall bestehenden Hülse, die über ihre gesamte Länge einen durchgehenden Längsschlitz aufweist. Hierdurch lässt sich die Klemmhülse 12 auf einfache Weise in radialer Richtung zusammen drücken. Im nicht zusammengedrückten Zustand weist die Klemmhülse 12 zweckmäßigerweise einen Innendurchmesser auf, der geringfügig größer als der Außendurchmesser der Kurbelwelle 8 ist, so dass die Klemmhülse 12 mit lediglich geringem Radialspiel auf die Kurbelwelle 8 aufgeschoben und axial auf dieser verschoben werden kann. Die Außenumfangsfläche 13 der Klemmhülse 12 ist zumindest in demjenigen vorderen Abschnitt, der mit dem Zahnrad 11 in Kontakt gelangt, kegelförmig ausgebildet.

Das Zahnrad 11 weist in demjenigen Bereich, der mit der konusförmigen Außenumfangsfläche 13 der Klemmhülse 12 in Eingriff gelangt, eine entsprechend kegelförmig ausgebildete Innenumfangsfläche 14 auf. Wird die Klemmhülse 12 axial in den Zwischenraum zwischen Kurbelwelle 8 und Zahnrad 11 eingeschoben (in Figur 2 nach links), wird das Zahnrad 11 auf der Kurbelwelle 8 verkeilt und damit festgeklemmt.

Die Klemmhülse 12 weist weiterhin im hinteren Endabschnitt eine Umfangsnut 15 auf. In diese Umfangsnut 15 kann ein nicht dargestelltes Abziehwerkzeug in Eingriff gebracht werden, falls zum Lösen der Klemmverbindung die Klemmhülse 12 wieder vom Zahnrad 11 abgezogen werden soll.

Es ist ersichtlich, dass bei einer Zahnradkombination, wie sie in Figur 1 dargestellt ist, die exakte axiale Positionierung des Zahnrads 11 auf der (axial feststehenden) Kurbelwelle 8 von großer Bedeutung ist, damit das Zahnrad 11 ordnungsgemäß mit dem Kegelrad 6 in Eingriff gelangt und die Zahnflanken in vorbestimmter Weise aufeinander abwälzen.

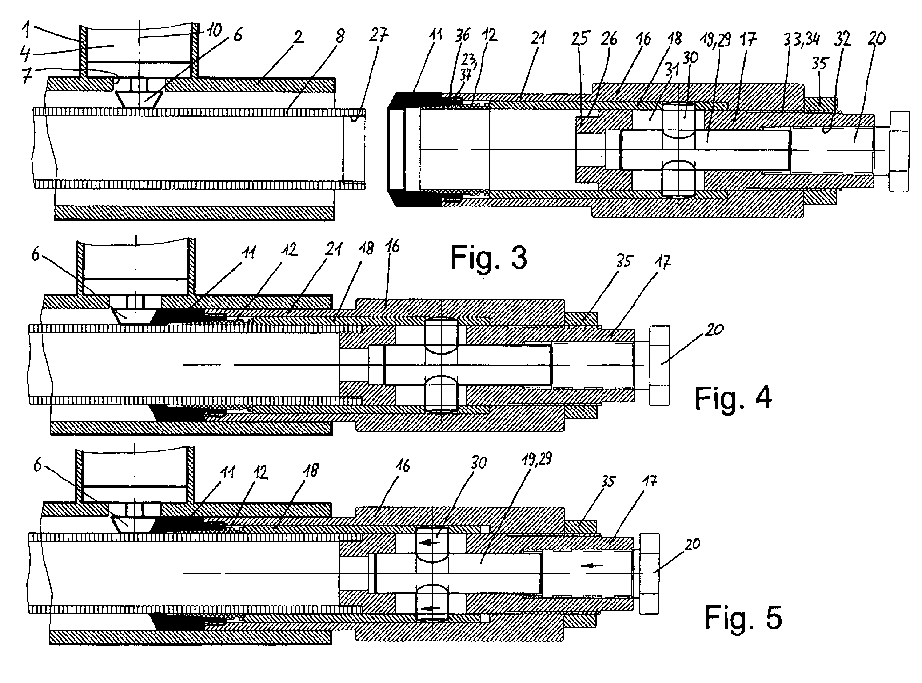

Hierzu wird erfindungsgemäß eine Montagevorrichtung verwendet, die in den Figuren 3 bis 5 dargestellt ist. Diese Montagevorrichtung weist im Wesentlichen eine äußere Zahnradhaltehülse 16, eine innere Befestigungshülse 17, eine dazwischen angeordnete Schiebehülse 18, einen Axialschieber 19 und eine Schraube 20 auf.

Die Hülsen 16, 17, 18 sind jeweils rohrförmig ausgebildet und koaxial zueinander angeordnet.

Die äußere Zahnradhaltehülse 16 weist einen vorderen Einführabschnitt 21 mit einem Außendurchmesser auf, der kleiner ist als der Innendurchmesser des Kurbelgehäuses 2, so dass der Einführabschnitt 21 in das Kurbelgehäuse 2 eingeschoben werden kann. Am vorderen Ende weist der Einführabschnitt 21 einen Gewindeabschnitt 36 mit einem Innengewinde 37 auf, in welches das Zahnrad 11 eingeschraubt werden kann. Das Zahnrad 11 weist hierzu einen Gewindeabschnitt 22 mit einem Außengewinde 23 auf, das in das Innengewinde 37 einschraubbar ist.

Der Außendurchmesser des Gewindeabschnitts 22 ist geringer als derjenige eines angrenzenden Zahnkranzes 38. Hierdurch wird eine Schulter 24 gebildet, die beim Einschrauben des Zahnrads 11 in die Zahnradhaltehülse 16 einen Axialanschlag bildet. Über die Gewindeabschnitte 22, 36 kann damit eine feste Verbindung zwischen Zahnrad 11 und Zahnradhaltehülse 16 geschaffen werden, so dass über die Zahnradhaltehülse 16 das Zahnrad 11 unverrückbar festgehalten wird, wenn die Klemmhülse 12 eingepresst wird.

Im gezeigten Ausführungsbeispiel weist ein hinterer Abschnitt der Zahnradhaltehülse 16 einen größeren Außendurchmesser auf als der vordere Einführungsabschnitt 21. Die dickere Wandstärke in diesem hinteren Abschnitt hat den Vorteil, dass die Zahnradhaltehülse 16 auch beim Aufbringen höherer Kräfte sehr formstabil bleibt. Es ist jedoch auch ohne Weiteres möglich, auch den hinteren Abschnitt der Zahnradhaltehülse 16 derart zu dimensionieren, dass sein Außendurchmesser nicht oder nur geringfügig größer ist als derjenige des Einführabschnitts 21, so dass der maximale Außendurchmesser der gesamten Vorrichtung kleiner ist als der Innendurchmesser des Kurbelgehäuses 2. Hierdurch kann der zusätzliche Vorteil erzielt werden, dass die gesamte Vorrichtung auch durch das Kurbelgehäuse 2 hindurch geführt werden kann, falls dies aus irgendwelchen Gründen bei der Demontage des Antriebs und der Kurbelwelle 8 erforderlich sein sollte.

Die innere Befestigungshülse 17 ist in einem hinteren Abschnitt der äußeren Zahnradhaltehülse 16 axial verschiebbar gelagert. Im vorderen Endabschnitt weist die Befestigungshülse 17 einen im Außendurchmesser verringerten, ersten Gewindeabschnitt 25 auf, der ein Außengewinde 26 trägt. Der Gewindeabschnitt 25 kann damit in ein Innengewinde 27 der rohrförmigen Kurbelwelle 8 eingeschraubt werden, wodurch die Befestigungshülse 17 fest mit der Kurbelwelle 8 verbunden werden kann, wie aus den Figuren 4 und 5 ersichtlich.

Die Schiebehülse 18 übergreift in einem hinteren Abschnitt die Befestigungshülse 17 und ist sowohl relativ zur Befestigungshülse 17 als auch zur Zahnradhaltehülse 16 axial verschiebbar und zwischen diesen beiden Hülsen 16, 17 gelagert. Der vordere Abschnitt der Schiebehülse 18 ragt in axialer Richtung über die Befestigungshülse 17 soweit vor, dass die vordere Stirnwand der Schiebehülse 18 mit der rückseitigen Stirnwand 28 (Figur 2) der Klemmhülse 12 in Anlage gebracht werden kann.

Die Axialverschiebung der Klemmhülse 12 relativ zum Zahnrad 11 erfolgt dadurch, dass die Schiebehülse 18 relativ zur Zahnradhaltehülse 16 und Befestigungshülse 17 in Richtung Zahnrad 11 verschoben wird. Diese Axialverschiebung erfolgt mittels des Axialschiebers 19, der mit der Schiebehülse 18 bewegungsgekoppelt ist, sowie mittels der Schraube 20, mit welcher der Axialschieber 19 in Axialrichtung relativ zur Befestigungshülse 17 verschoben werden kann.

Der Axialschieber 19 weist hierzu einen innerhalb der Befestigungshülse 17 axial verschiebbar gelagerten, zylinderförmigen Schiebebolzen 29 auf, der von einem auf beiden Seiten über den Schiebebolzen 29 vorstehenden Querstift 30 durchdrungen ist. Der Querstift 30 erstreckt sich durch axiale Langlöcher 31 der Befestigungshülse 17 hindurch. In seinen beiden gegenüberliegenden Endbereichen ist der Querstift 30 in Bohrungen der Schiebehülse 18 aufgenommen, wodurch der Axialschieber 19 fest mit der Schiebehülse 18 gekoppelt ist. Die Länge der Langlöcher 31 und der Bewegungsfreiraum für den Querstift 30 in den Langlöchern 31 ist so bemessen, dass sich der Axialschieber 19 frei über die gesamte notwendige Einpressstrecke bewegen lässt, welche die Klemmhülse 12 relativ zum Zahnrad 11 zurücklegen muss, um einen sicheren Klemmsitz des Zahnrads 11 auf der Kurbelwelle 8 zu erhalten.

Die Axialverschiebung des Axialschiebers 19 relativ zur Befestigungshülse 17 erfolgt mittels der Schraube 20, die koaxial zum Schiebebolzen 29 in ein hinteres Innengewinde 32 der Befestigungshülse 17 eingeschraubt werden kann. Beim Einschrauben der Schraube 20 drückt die vordere Stirnwand der Schraube 20 gegen die hintere Stirnwand des Schiebebolzens 29 und drückt diesen dadurch nach vorne, d.h. in den Figuren 3 bis 5 nach links.

Zur Montage des Zahnrads 11 auf der Kurbelwelle 8 wird das Zahnrad 11 zunächst, wie aus Figur 3 ersichtlich, auf den Einführabschnitt 21 der Zahnradhaltehülse 16 aufgeschraubt. Die Klemmhülse 12 ist dabei bereits in das Zahnrad 11 eingesteckt. Anschließend werden, wie aus Figur 4 ersichtlich, das Zahnrad 11 und die Klemmhülse 12 in den Zwischenraum zwischen Kurbelgehäuse 2 und Kurbelwelle 8 eingeführt und die Befestigungshülse 17 wird mit der Kurbelwelle 8 verschraubt.

Die Zahnradhaltehülse 16 kann nun zusammen mit dem Zahnrad 11 weiter so weit nach vorne verschoben werden, bis das Zahnrad 11 in vorbestimmter Weise in das Kegelrad 6 eingreift.

Das Verschieben der Zahnradhaltehülse 16 erfolgt durch Drehen der Zahnradhaltehülse 16 relativ zur Befestigungshülse 17 und mit Hilfe einer Schraubverbindung, die im hinteren Bereich der beiden Hülsen 16, 17 angeordnet ist. Hierzu weist die Befestigungshülse 17 einen hinteren, zweiten Gewindeabschnitt 33 mit einem Außengewinde 34 auf, in das ein entsprechendes Innengewinde der Zahnradhaltehülse 16 eingreift. Die Relativposition der Zahnradhaltehülse 16 relativ zur Befestigungshülse 17 kann mittels einer Sicherungsmutter 35 fixiert werden, die ebenfalls auf das Außengewinde 34 aufschraubbar ist und als Kontermutter wirkt.

Die genaue Axialposition des Zahnrads 11 kann nun durch Drehen der Kurbelwelle 8 über das Laufgeräusch und über die manuell erfühlten Rundlaufeigenschaften der Kurbelwelle 8 festgestellt werden. Beim Drehen der Kurbelwelle 8 wird das Zahnrad 11 mittels der Montagevorrichtung mitgedreht, da die Kurbelwelle 8 mit der Befestigungshülse 17, diese mit der Zahnradhaltehülse 16 und diese mit dem Zahnrad 11 drehfest verbunden ist.

Ergibt das Laufgeräusch bzw. das Gefühl, dass das Zahnrad 11 noch nicht weit genug eingeschoben ist, kann die Zahnradhaltehülse 16 nach Lösen der Sicherungsmutter 35 durch weiteres Aufschrauben auf die Befestigungshülse 17 noch weiter nach vorne verschoben werden, bis die Axialposition optimal ist. Anschließend wird die Drehposition der Zahnradhaltehülse 16 mittels der Sicherungsmutter 35 wieder gesichert.

Befindet sich das Zahnrad 11 in der optimalen, gesicherten Axialposition, wird, wie aus Figur 5 ersichtlich, die Schraube 20 in die Befestigungshülse 17 eingeschraubt, wodurch der Axialschieber und die Schiebehülse 18 axial nach vorne verschoben werden. Hierdurch wird die Klemmhülse 12 in den Zwischenraum zwischen Kurbelwelle 8 und Zahnrad 11 eingepresst, wodurch die gewünschte Klemmverbindung zwischen Kurbelwelle 8 und Zahnrad 11 geschaffen wird. Bei diesem Einpressvorgang wird das Zahnrad 11 über die Zahnradhaltehülse 16 und die Befestigungshülse 17 axial unverschiebbar an der Kurbelwelle 8 gehalten.

Nach dem Festklemmen der Klemmhülse 12 wird die Befestigungshülse 17 wieder von der Kurbelwelle 8 und die Zahnradhaltehülse 16 vom Zahnrad 11 abgeschraubt. Dies kann auf einfache und zweckmäßige Weise dadurch gleichzeitig erfolgen, dass die Gewindeabschnitte 25, 36, vorzugsweise auch der hintere Gewindeabschnitt 33, die gleiche Gewindesteigung haben.

Muss das Zahnrad 11 aus irgendwelchen Gründen demontiert werden, kann die Klemmhülse 12 mittels eines nicht dargestellten, weiteren Werkzeugs herausgezogen werden, das mit der Umfangsnut 15 der Klemmhülse 12 in Eingriff gebracht wird. Auch zur Demontage des Zahnrads 11 ist somit keine Demontage der Kurbelwelle 8 erforderlich.

## Patentansprüche

1. Vorrichtung zum positionsgenauen Montieren eines Zahnrads (11) auf einer Kurbelwelle (8) innerhalb eines Kurbelgehäuses (2) eines Fahrrads mittels eines Klemmelements, umfassend:
- eine innere Befestigungshülse (17) zur Befestigung der Vorrichtung an der Kurbelwelle (8),
- eine äußere, in das Kurbelgehäuse (2) einführbare Zahnradhaltehülse (16), an der das Zahnrad (11) lösbar befestigbar ist, und
- eine Klemmelementverschiebeeinrichtung zum axialen Verschieben des Klemmelements in seine Klemmposition relativ zum Zahnrad (11) und zur Kurbelwelle (8).

2. Vorrichtung nach Anspruch 1, **dadurch gekennzeichnet, dass** die innere Befestigungshülse (17) einen ersten Gewindeabschnitt (25) aufweist, über den sie mit der Kurbelwelle (8) verschraubbar ist.

3. Vorrichtung nach Anspruch 1 oder 2, **dadurch gekennzeichnet, dass** die Klemmelementverschiebeeinrichtung eine Schiebehülse (18) umfasst, die zwischen der innere Befestigungshülse (17) und der äußeren Zahnradhaltehülse (16) axial verschiebbar angeordnet und mit dem Klemmelement in Anlage bringbar ist.

4. Vorrichtung nach Anspruch 3, **dadurch gekennzeichnet, dass** die Klemmelementverschiebeeinrichtung einen Axialschieber (19) umfasst, der innerhalb der Befestigungshülse (17) axial verschiebbar angeordnet und mit der Schiebehülse (18) gekoppelt ist.

5. Vorrichtung nach Anspruch 4, **dadurch gekennzeichnet, dass** der Axialschieber (19) einen innerhalb der Befestigungshülse (17) verschiebbar gelagerten Schiebebolzen (29) und mindestens einen Querstift (30) umfasst, der sich durch ein axiales Langloch (31) der Befestigungshülse (17) radial nach außen erstreckt und mit der Schiebehülse (18) gekoppelt ist.

6. Vorrichtung nach Anspruch 4 oder 5, **dadurch gekennzeichnet, dass** der Axialschieber (19) mittels einer Schraube (20) bewegbar ist, die in ein Innengewinde (32) der Befestigungshülse (17) einschraubbar ist und stirnseitig gegen den Axialschieber (19) drückt.

7. Vorrichtung nach einem der vorhergehenden Ansprüche, **dadurch gekennzeichnet, dass** die Zahnradhaltehülse (16) relativ zur Befestigungshülse (17) axial verschiebbar ist.

8. Vorrichtung nach einem der vorhergehenden Ansprüche, **dadurch gekennzeichnet, dass** die Position der äußeren Zahnradhaltehülse (16) relativ zur inneren Befestigungshülse (17) mittels einer Sicherungsmutter (35) fixierbar ist, die auf einen zweiten Gewindeabschnitt (33) der Befestigungshülse (17) aufschraubbar ist.

9. Vorrichtung nach einem der vorhergehenden Ansprüche, **dadurch gekennzeichnet, dass** die Zahnradhaltehülse (16) einen endseitigen Gewindeabschnitt (36) aufweist, mit dem das Zahnrad (11) drehfest und axial unverschiebbar verbindbar ist.

10. Vorrichtung nach einem der vorhergehenden Ansprüche, **dadurch gekennzeichnet, dass** das Klemmelement aus einer längsgeschlitzten konischen Klemmhülse (12) besteht.

11. Vorrichtung nach einem der vorhergehenden Ansprüche, **dadurch gekennzeichnet, dass** die Zahnradhaltehülse (16) einen Gewindeabschnitt (36) zur Schraubverbindung mit einem Gewindeabschnitt (22) des Zahnrads (11) aufweist.

12. Vorrichtung nach einem der vorhergehenden Ansprüche, **dadurch gekennzeichnet, dass** die Gewindeabschnitte (25, 33, 36) der Befestigungshülse (17) und der Zahnradhaltehülse (16) die gleiche Gewindesteigung haben.

## Claims

1. Device for mounting a gear (11) in a precise position on a crankshaft (8) inside a crankcase (2) of a bicycle by means of a clamping element, comprising:
- an inner fastening sleeve (17) for fastening the device to the crankshaft (8),
- an outer gear holding sleeve (16) which can be inserted into the crankcase (2), to which sleeve the gear (11) can be detachably fastened, and
- a clamping element displacement means for axially displacing the clamping element into the clamping position thereof relative to the gear (11) and the crankshaft (8).

2. Device according to claim 1, **characterised in that** the inner fastening sleeve (17) comprises a first threaded portion (25), by means of which said inner fastening sleeve can be screwed to the crankshaft (8).

3. Device according to either claim 1 or claim 2, **characterised in that** the clamping element displacement means comprises a sliding sleeve (18) which is axially displaceably arranged between the inner fastening sleeve (17) and the outer gear holding sleeve (16) and can be brought into abutment with the clamping element.

4. Device according to claim 3, **characterised in that** the clamping element displacement means comprises an axial slide (19), which is axially displaceably arranged inside the fastening sleeve (17) and is coupled to the sliding sleeve (18).

5. Device according to claim 4, **characterised in that** the axial slide (19) comprises a sliding bolt (29), which is displaceably mounted inside the fastening sleeve (17), and at least one transverse pin (30), which extends radially outwards through an axial elongate hole (31) in the fastening sleeve (17) and is coupled to the sliding sleeve (18).

6. Device according to either claim 4 or claim 5, **characterised in that** the axial slide (19) is movable by means of a screw (20) which can be screwed into an internal thread (32) of the fastening sleeve (17) and presses against the axial slide (19) at the end face.

7. Device according to any of the preceding claims, **characterised in that** the gear holding sleeve (16) is axially displaceable relative to the fastening sleeve (17).

8. Device according to any of the preceding claims, **characterised in that** the position of the outer gear holding sleeve (16) can be fixed relative to the inner fastening sleeve (17) by means of a lock nut (35), which can be screwed onto a second threaded portion (33) of the fastening sleeve (17).

9. Device according to any of the preceding claims, **characterised in that** the gear holding sleeve (16) comprises a threaded portion (36) at the end, with which threaded portion the gear (11) can be rotationally engaged and to which it can be axially non-displaceably connected.

10. Device according to any of the preceding claims, **characterised in that** the clamping element consists of a longitudinally slit conical clamping sleeve (12).

11. Device according to any of the preceding claims, **characterised in that** the gear holding sleeve (16) comprises a threaded portion (36) for a screw connection to a threaded portion (22) of the gear (11).

12. Device according to any of the preceding claims, **characterised in that** the threaded portions (25, 33, 36) of the fastening sleeve (17) and the gear holding sleeve (16) have the same thread pitch.

## Revendications

1. Dispositif pour le montage en position précise d'une roue dentée (11) sur un arbre à manivelle (8) dans un boîtier de manivelle (2) d'un cycle au moyen d'un élément de coincement, comprenant :
- une douille de fixation intérieure (17) pour fixer le dispositif sur l'arbre de manivelle (8),
- une douille extérieure de maintien de roue dentée (16), susceptible d'être introduite dans le boîtier de manivelle (2) et sur laquelle la roue dentée (11) peut être fixée de manière détachable, et
- un dispositif de déplacement d'élément de coincement pour le déplacement axial de l'élément de coincement jusque dans sa position de coincement par rapport à la roue dentée (11) et à l'arbre de manivelle (8).

2. Dispositif selon la revendication 1, **caractérisé en ce que** la douille de fixation intérieure (17) comporte un premier tronçon à pas de vis (25) au moyen duquel elle peut être vissée sur l'arbre de manivelle (8).

3. Dispositif selon la revendication 1 ou 2, **caractérisé en ce que** le dispositif de déplacement d'élément de coincement comprend une douille coulissante (18), qui est agencée en coulissement axial entre la douille de fixation intérieure (17) et la douille extérieure de maintien de roue dentée (16) et qui peut être amenée en contact avec l'élément de coincement.

4. Dispositif selon la revendication 3, **caractérisé en ce que** le dispositif de déplacement d'élément de coincement comprend un coulisseau axial (19) qui est agencé en coulissement axial à l'intérieur de la douille de fixation (17) et qui est couplé avec la douille coulissante (18).

5. Dispositif selon la revendication 4, **caractérisé en ce que** le coulisseau axial (19) inclut un goujon coulissant (29) monté en coulissement à l'intérieur de la douille de fixation (17) et au moins une broche transversale (30), qui s'étend radialement vers l'extérieur à travers un trou oblong axial (31) de la douille de fixation (17) et qui est couplée avec la douille coulissante (18).

6. Dispositif selon la revendication 4 ou 5, **caractérisé en ce que** le coulisseau axial (19) est déplaçable au moyen d'une vis (20), qui peut être vissée dans un pas de vis intérieur (32) de la douille de fixation (17) et qui pousse du côté frontal contre le coulisseau axial (19).

7. Dispositif selon l'une des revendications précédentes, **caractérisé en ce que** la douille de maintien de roue dentée (16) est déplaçable axialement par rapport à la douille de fixation (17).

8. Dispositif selon l'une des revendications précédentes, **caractérisé en ce que** la position de la douille extérieure de maintien de roue dentée (16) par rapport à la douille de fixation intérieure (17) est susceptible d'être fixé au moyen d'un écrou de blocage (35) qui peut être vissé sur un second tronçon à pas de vis (33) de la douille de fixation (17).

9. Dispositif selon l'une des revendications précédentes, **caractérisé en ce que** la douille de maintien de roue dentée (17) comporte un tronçon à pas de vis terminal (36), avec lequel la roue dentée (11) peut être reliée solidairement en rotation et sans possibilité de déplacement axial.

10. Dispositif selon l'une des revendications précédentes, **caractérisé en ce que** l'élément de coincement est une douille de coincement conique fendue longitudinalement.

11. Dispositif selon l'une des revendications précédentes, **caractérisé en ce que** la douille de maintien de roue dentée (16) comporte un tronçon à pas de vis (36) pour une liaison vissée avec un tronçon à pas de vis (22) de la roue dentée (11).

12. Dispositif selon l'une des revendications précédentes, **caractérisé en ce que** les tronçons à pas de vis (25, 33, 36) de la douille de fixation (17) et de la douille de maintien de roue dentée (16) ont le même pas.
